# EUROPEAN PATENT SPECIFICATION

(11) **EP 3 173 328 B1**
(45) Date of publication and mention of the grant of the patent: **01.01.2020**
(21) Application number: 15382588.0
(22) Date of filing: 26.11.2015
(51) Int. Cl.: B64C 21/06

(54) **LEADING EDGE WITH LAMINAR FLOW CONTROL**
VORDERKANTE MIT LAMINARER STRÖMUNGSREGELUNG
BORD D'ATTAQUE AVEC CONTRÔLE D'ÉCOULEMENT LAMINAIRE

(43) Date of publication of application: 31.05.2017
(73) Proprietor: Airbus Operations, S.L., 28906 Getafe (Madrid) (ES)
(72) Inventor: GUINALDO FERNANDEZ, Enrique, 28906 GETAFE (Madrid) (ES); CEBOLLA GARROFE, Pablo, 28906 GETAFE (Madrid) (ES); VÉLEZ DE MENDIZABAL ALONSO, Iker, 28906 GETAFE (Madrid) (ES); CRESPO PEÑA, Soledad, 28906 GETAFE (Madrid) (ES); GARCÍA NIETO, Carlos, 28906 GETAFE (Madrid) (ES); HONORATO RUIZ, Francisco, Javier, 28906 GETAFE (Madrid) (ES); CALERO CASANOVA, Alvaro, 28906 GETAFE (Madrid) (ES); TORRES SALAS, Álvaro, 28906 GETAFE (Madrid) (ES)
(74) Representative: Carpintero Lopez, Francisco

(56) References cited:
- EP-A2- 2 418 147
- US-A- 5 263 667
- US-A- 5 366 177
- US-A1- 2010 294 892
- US-A1- 2013 175 402
- US-A1- 2014 021 304
- US-A1- 2015 183 513

## Description

### Object of the invention

The present invention refers to the configuration of a leading edge section with laminar flow control, for aircraft lifting surfaces, such as wings or stabilizers.

An object of the present invention is to provide a leading edge design integrating a laminar flow control system, which improve aircraft performance and leading edge optimization from structural point of view, including bird impact improved performance.

Additionally, it is also an object of the present invention to provide a leading edge with a laminar flow control system, which components are easily accessible for their inspection and maintenance.

### Background of the invention

Aircraft manufacturers are continuously seeking ways of increasing aircraft performance and reducing fuel consumption. One of the main factors when it comes to improving aircraft performance, is the aerodynamic drag on aircraft surfaces.

A significant amount of aircraft drag is caused by turbulent air flow on the aircraft exposed surfaces during flight. Near the aircraft skin the air flow is turbulent mainly due to the following reasons:
- laminar flow is unstable with respect to small perturbations, and
- surface imperfections may cause early transition from laminar to turbulence.

Since air laminar boundary layers create less friction at the aircraft surfaces than air turbulent boundary layers, one technique for reducing aircraft drag is to form and maintain a laminar boundary layer over the aircraft external surfaces.

Laminar Flow reduces friction drag and implementation on vertical tail planes (VTP) and horizontal tail planes (HTP), would potentially lead to up to 2% aircraft drag reduction.

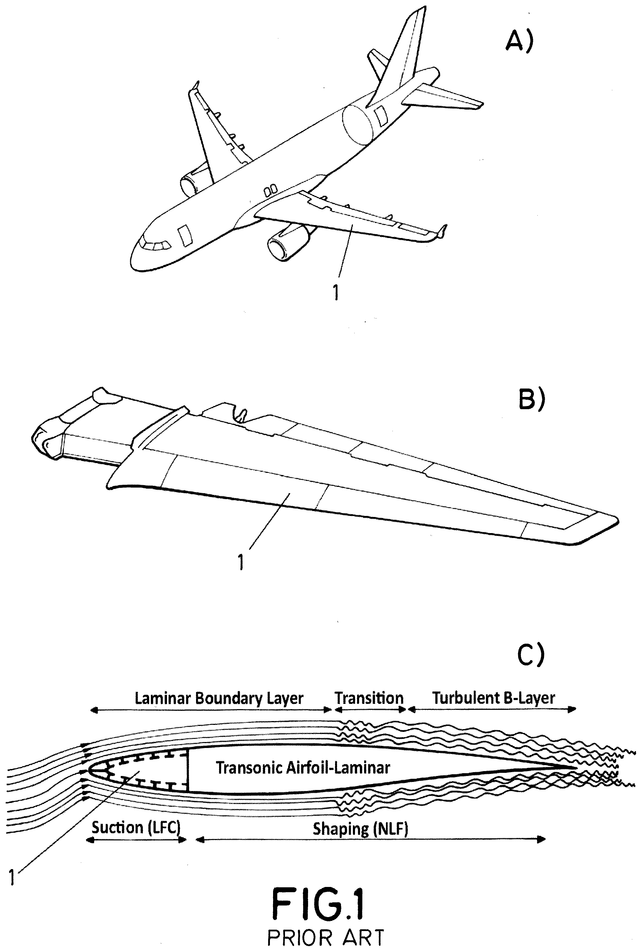

Current existing methods to form and maintain a laminar flow are:
- Natural Laminar Flow (NLF) is obtained by a profile that produces a progressive pressure drop (i.e. favourable gradient) resulting in flow acceleration and a delay in transition to turbulence approximately at the point of minimum pressure.
- Laminar Flow Control (LFC) which relies on a relatively small amount of air being sucked through a perforated skin to suppress boundary layer instabilities.
- Hybrid Laminar Flow Control (HLFC) is a combination of full LFC and NLF as shown in figure 1, which relies on:
   1. suction being applied to the leading edge (1) 10 - 20% of the chord (i. e. ahead of the front spar), to stabilize the flow, and
   2. a correctly profiled wing or lifting surface contour, to generate a suitable pressure gradient, thus maintaining the laminar flow aft of the suction area.

Transition from laminar to turbulent flow, is delayed by this technique, and may even occur after the 50% chord location, due to the combined effects of the local pressure gradient and Reynolds number.

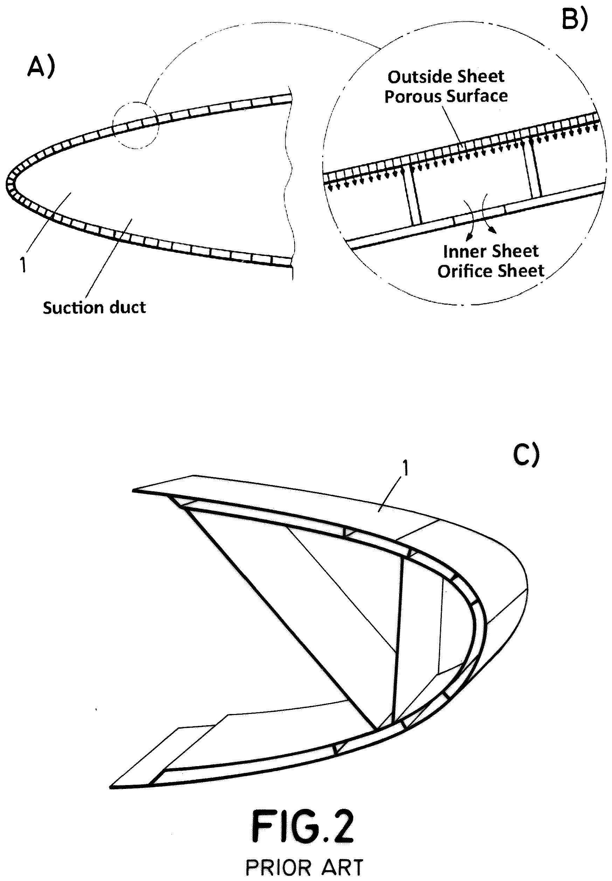

Figure 2 shows a laminar flow control system, to actuate on the boundary layer by bleeding air through a micro-perforated skin surface at the leading edge (1). Typically, the diameter of the micro-perforations is within the range 10 - 100 microns. The air is ducted beneath the skin through a network of chambers located at the leading edge section (D-box) (1), and finally exhausted, through a main chamber or a suction duct.

As suction is limited to the forward part of the wing or lifting surface, HLFC avoids many of the structural problems associated with LFC. It also requires a smaller and lighter suction system. These advantages make HLFC more suitable than full LFC for subsonic transport aircraft. The HLFC technology has also good aerodynamic performance in the fully turbulent mode, which is a significant advantage.

This air suction system of the leading edge (1) requires a differential pressure distribution over the leading edge surface. This differential pressure distribution is achieved by providing chambers of different size, to obtain different pressure within each chamber, as shown more clearly in figure 2C.

US patent application US2015/0183513 A1 relates to a flow body having a perforated outer skin at least in some regions, and to a method for manufacturing such a flow body.

US patent application US5366177 A relates to a laminar flow control apparatus for aerodynamic surfaces, and more particularly to an apparatus adapted to be mounted on an aircraft structural surface, such as a wing or fuselage.

For its part, patent application US2013/175402 A1 relates to an air-sucking vehicle fuselage component having an outer delimitation part and an inner delimitation part.

Patent application US2014/021304 A1 relates to a profile plate portion for use as an outer wall of a flow body, and to a method for manufacturing said profile plate portion.

Furthermore, US patent application U5263667 A relates to a perforated surface such as a wing panel of an aircraft with a spatially variable distribution of effective perforation area.

On the other hand, US2010/0294892 A1 relates to a device for reducing the aerodynamic drag of a surface area, in particular in an area of a vertical tailplane, an airfoil, a fuselage section, and/or a horizontal tailplane of an aircraft.

One of the main problems involved in the implementation of the HLFC technique, is that the components of the leading edge have to be manufactured separately and then assembled together. In addition to this, assembly by means of mechanical joints may reduce the effective outer suction surface. Thus, manufacturing and assembly processes of these multi-chambered structures with laminar flow control, are complicated and expensive. Furthermore, the weight penalty involved is significantly high due to the metallic materials implemented and the length of all mechanical joints used for building the leading edge, penalizing so much the aircraft performances that all HLFC benefits would be overcame and, as consequence, its implementation may be discarded

### Summary of the invention

The present invention is defined in the attached independent claims 1 and 2, and refers to a leading edge of an aircraft wing or stabilizer (a HTP, or a VTP to obtain a leading section integrating a laminar flow control system.

The leading edge with laminar flow control typically comprises a micro-drilled outer skin, an inner surface and a group of suction chambers formed between the outer skin and inner surface, wherein the suction chambers are arranged and dimensioned to obtain different pressure gradients over the outer wet surface of the leading edge, such as, via the micro-drilled outer skin, different suction pressures are so achieved on the wet surface of the leading edge.

Therefore, an aspect of the invention refers to a leading edge section obtained mainly from composite materials, and configured to implement a laminar flow control, which comprises a perforated outer skin shaped with an aerodynamic leading edge profile, an inner surface internally arranged with respect to the outer skin, and a plurality of suction chambers for the laminar flow control, formed between the outer skin and inner surface, such as an exterior region of the leading edge is communicated with an interior region of the leading edge through said suction chambers. Suction means are provided for suctioning air at the wet surface of the outer skin through the suction chambers, and towards the leading edge interior, from where it is exhausted.

The leading edge section comprises a plurality of radial structural elements dimensioned to withstand structural loads at the leading edge. According to the invention, these radial structural elements are arranged to configure the suction chambers, together with the outer skin and the inner surface.

The position and angle of the radial structural elements are selected to follow the direction of the most critical Bird Strike (BS) angles of impacts or trajectories, so that the structure supports more efficiently these BS events. Additionally, the radial structural elements are distributed in order to optimize the leading edge sizing process, mainly driven by stability and stiffness requirements.

The radial structural elements and/or the inner surface are perforated, to communicate an exterior region of the leading edge with an interior region of the leading edge to obtain the HLFC.

In one preferred embodiment, the leading edge includes a tubular member internally arranged, such as the inner surface is a part of the tubular member. The tubular member may have a circular or elliptical cross-sectional shape, or any other cross-sectional shape suitable for each particular implementation.

One of the main advantages of the invention is that instead of using dedicated components to configure the suction chambers for the hybrid laminar flow control (HLFC), some traditional components of the leading edge, like the radial structural elements, are re-arranged to configure the suctions chambers for the HLFC.

Preferred materials for manufacturing the leading edge are:
1. Carbon Fiber Reinforced Plastic (CFRP) dry carbon fiber injection (RTM).
2. CFRP pre-preg carbon fiber with chamber-shaped pre-forms to define the position and orientation of the spars.
3.- Composites and Fiber Reinforced Plastics in general, for example: fiber glass, Aramide, or hybrid combinations thereof etc.
4.- Metals, for example aluminum.

With respect to the assembly process, when the leading edge is obtained from CFRP materials, preferably the structural part is formed by the radial structural elements, and the inner surface cured together and then bonded to the outer micro-perforated skin. This construction concept makes the reparability and inspection of the chambers easier with respect to conventional HLFC structural solutions.

Some of the advantages of the invention can be summarized as follows:
- allow different material combinations for a HTP LE HLFC configuration.
- easier reparability and chambers inspection with respect to conventional HLFC structural solutions.
- allow the integration of a HTP LE HLFC configuration as structural part of a HTP.
- improvement of the structure for Bird Strike.
- sizing optimization.
- decrease of recurrent cost, compared with prior art HLFC leading edges.
- adaptability of the architecture and size of the leading edge.

### Brief description of the drawings

Preferred embodiments of the invention, are henceforth described with reference to the accompanying drawings, in which:
Figure 1.- shows a cross-sectional view of an schematic representation of a wing or lifting surface with a hybrid laminar flow configuration according to the prior art, wherein laminar and turbulent air flow is represented with thin lines on upper and lower surfaces.
Figure 2.- shows a conventional multi-chamber configuration of the leading edge section of a wing or lifting surface with laminar flow control, as the one shown in figure 1, wherein drawing (A) is a cross-sectional view, drawing (B) is an enlarged view of a detail of drawing (A), and drawing (C) is a perspective view.
Figure 3.- shows a schematic representation of a cross-sectional view of a preferred embodiment of a leading edge section according to the invention. The dots designate perforations positions on the inner surface.
Figure 4.- is a similar representation than figure 3, illustrating the bonding process between the outer skin and the internal structure of the leading edge.
Figure 5.- is a similar representation than figure 3, illustrating the process of manufacturing the leading edge entirely in one-shot using pre-forms. The pre-forms are shown in broken lines.
Figure 6.- is a similar representation than figure 3 corresponding to another preferred embodiment of the invention.

### Preferred embodiment of the invention

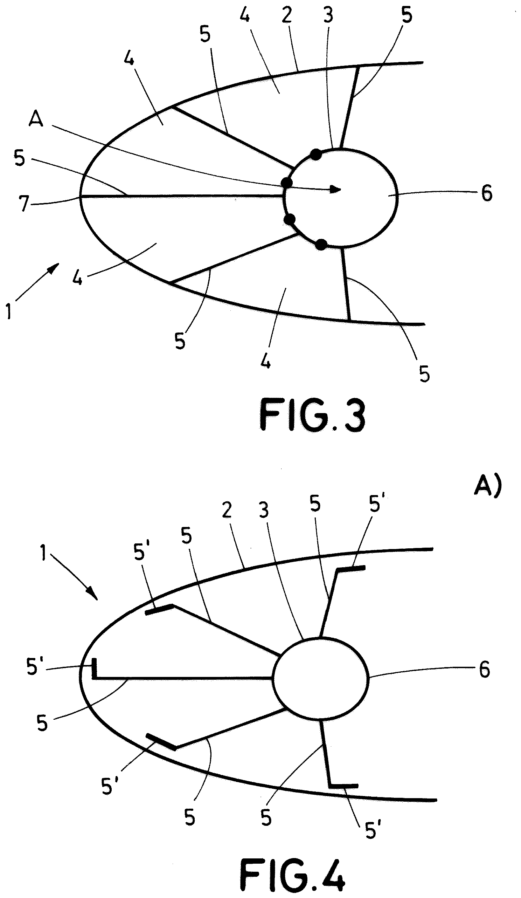

Figure 3 shows a preferred example of a leading edge section (1) with a laminar flow control, comprising: a perforated outer skin (2) shaped with an aerodynamic leading edge profile, an inner surface (3) internally arranged with respect to the outer skin (2), and a plurality of suction chambers (4) formed between the outer skin and the inner surface (2,3).

The leading edge section (1) further comprises a plurality of radial structural elements (5) configured to withstand structural loads at the leading edge. The radial structural elements (5) are arranged to define the suction chambers (4) together with the outer skin (2) and the inner surface (3). More in detail, each radial structural elements (5) is positioned such as one of its ends is attached to the outer skin (2) and the other end is attached to the inner surface (3), such as each suction chamber (4) is formed by two consecutive radial structural elements, a part of the outer skin (2) and part of the inner surface (3).

In the embodiment of figure 3, the leading edge (1) includes a tubular member (6) extending span-wise at the leading edge and placed at a central area of the leading edge (in a cross-sectional view). The inner surface (3) is a part of the tubular member (6), and the radial structural elements (5) are radially distributed at the leading edge (1), which means that they extend from a central area of the leading edge (1) in different directions. Suction means (not shown) would apply suction at the interior of the leading edge (1).

Additionally in this embodiment, the inner surface (3) is perforated in order to communicate through said suction chambers (4), an exterior region of the leading edge (1) with an interior region of the leading edge (1), in this case with the interior of the tubular member (6) as indicated by arrow (A).

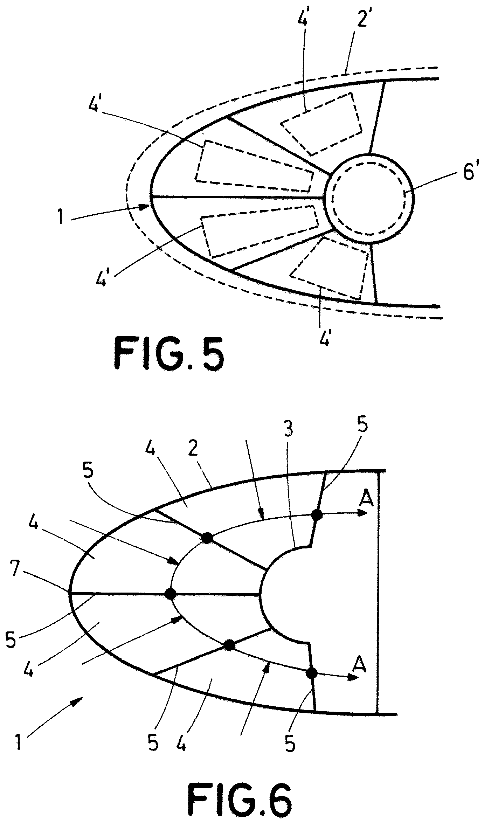

In the alternative embodiment of figure 6, instead of having a perforated inner surface, the radial structural elements (5) are perforated, such as the communication between the exterior of the leading edge (1) and its interior, is obtained through them, as shown by the arrows (A). In this case, the suctioned air, flows from one chamber (4) to the followings chambers (4) until it is expelled through the last one, creating in this way the required suction for HLFC.

The radial structural elements (5) are positioned in accordance with the direction of the most critical Bird Strike (BS) angles of impact. For example, in the embodiments of figures 3 and 6, one radial structural element (5) is arranged such as one of its ends is attached at or near the leading edge tip (7).

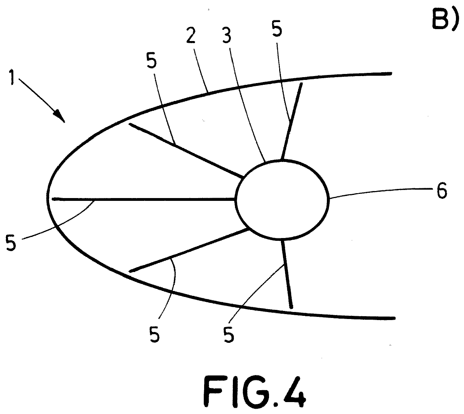

With respect to the method for manufacturing the leading edge (1), figure 4 shows a preferred manufacturing technique, wherein the radial structural elements (5) and the tubular member (6) are obtained in one-shot, that is, they are cured together in the same curing cycle. Alternatively, the radial structural elements (5) and the tubular member (6) can be manufactured and assembled by means of other techniques or combination of techniques, suitable for each application.

When the tubular member (6) or the radial structural elements (5) have been cured, they can be drilled after the curing process, or in an intermediate process previous to it.

The outer skin (2) is conformed and cured separately, and then the radial structural elements (5) are bonded internally to the outer skin (2). For that purpose, in the embodiment of figure 4A, the radial structural elements (5) are provided at one of its ends with flanges (5') to enlarge the interface surface with the outer skin (2). In the alternative embodiment of figure 4B, instead of using bonded flanges, the free edge of each radial structural element (5) is welded to the inner surface of the outer skin (2).

As it can be observed in figure 4, one of the advantages of having the radial structural elements bonded with the outer skin, is that the outer skin could be replaced by a new one.

Since the radial structural elements are bonded with the outer skin, different materials can be used during the manufacturing process:
- Flat micro-drilled Titanium or another metal layer conformed to outer leading edge wet surface shape.
- CFRP pre-preg carbon fiber, micro-drilled after part curing cycle.
- Composites and Fiber Reinforced Plastics in general, for example: fiber glass, Aramide, or hybrid combinations thereof etc.
- Metals, for example aluminum.

In the case of using a CFRP material, an erosion protective layer is preferably co-bonded or co-cured, with the outer skin. This erosion protective layer may consist of a polyurethane coating, a metallic coating or a metallic layer impregnated with resin, sealant, or adhesive on one of its surfaces.

Alternatively, the leading edge section (1) can be obtained entirely in one-shot manufacturing process, as represented in figure 5. In this alternative manufacturing method, several pre-forms of CFRP (2', 4', 6') are conformed and assembled together as shown in the figure. More specifically, one outer skin pre-form (2'), one tubular member pre-form (6') and several four-sided pre-forms (4') to form the radial structural elements (5) and the suction chambers (4). Finally, the whole set of pre-forms are cured together.

Other preferred embodiments of the present invention are described in the appended dependent claims and the multiple combinations of those claims.

## Claims

1. A leading edge section (1) with a laminar flow control comprising:
a perforated outer skin (2) shaped with an aerodynamic leading edge profile,
an inner surface (3) internally arranged with respect to the outer skin (2),
a plurality of suction chambers (4) formed between the outer skin (2) and the inner surface (3),
a plurality of radial structural elements (5) to withstand structural loads at the leading edge (1), wherein,
the leading edge section (1) further comprises a tubular element (6) span-wise arranged at the leading edge section (1), and wherein the inner surface (3) is perforated and it is a part of the tubular element (6) such that the tubular element (6) has perforations in correspondence with the inner surface (3) so that an exterior region of the leading edge (1) is communicated with the interior of the tubular element (6) through said suction chambers (4) and the inner surface (3);
wherein the radial structural elements (5) are radially distributed at the leading edge section (1);
wherein one radial structural element (5) is arranged such that one of its ends is attached at the leading edge forward point (7) of the leading edge (1);
wherein the radial structural elements (5) have free edges;
and wherein the radial structural elements (5) are provided at their free edges with flanges (5') to enlarge the interface surface with the outer skin (2).

2. A leading edge section (1) with a laminar flow control comprising:
a perforated outer skin (2) shaped with an aerodynamic leading edge profile,
an inner surface (3) internally arranged with respect to the outer skin (2),
a plurality of suction chambers (4) formed between the outer skin (2) and the inner surface (3),
a plurality of radial structural elements (5) to withstand structural loads at the leading edge (1), wherein,
the radial structural elements (5) are radially distributed at the leading edge section (1);
wherein the radial structural elements (5) are drilled, such that an exterior region of the leading edge (1) is communicated with an interior region of the leading edge (1) through the suction chambers (4) and the radial structural elements (5);
wherein one radial structural element (5) is arranged such that one of its ends is attached at the leading edge forward point (7) of the leading edge (1);
and wherein the radial structural elements (5) are provided at one of its ends with flanges (5') to enlarge the interface surface with the outer skin (2).

3. Leading edge section (1) according to claim 1 or 2, wherein each radial structural element (5) is positioned such that one of its ends is attached to the outer skin (2) and the other end is attached to the inner surface (3), such that each suction chamber (4) is formed by two consecutive radial structural elements (5), a part of the outer skin (2) and part of the inner surface (3).

4. Leading edge section (1) according to claim 2 wherein the radial structural elements (5) have free edges.

5. Leading edge section (1) according to claims 1 or 4 wherein the free edges are bonded internally to the outer skin (2).

6. Leading edge section (1) according to claim 1 or 2, wherein each radial structural element (5) has a free edge which is welded to the inner surface of the outer skin (2).

7. Leading edge section (1) according to any of the preceding claims, obtained from a composite material.

8. Leading edge section (1) according to claim 7, wherein the composite material is selected from the list: Carbon Fiber Reinforced Plastic (CFRP), fiber glass, Aramide, or any combination thereof.

9. Leading edge section (1) according to claim 1 or 2, wherein the leading edge (1) is metallic.

10. Leading edge section (1) according to claim 8, further comprising an erosion protective layer co-bonded or co-cured with the outer skin (2) when using a CFRP material.

11. Leading edge section (1) according to claim 10 wherein the erosion protective layer consists of a polyurethane coating, a metallic coating or a metallic layer impregnated with resin, sealant or adhesive on one of its surfaces.

## Patentansprüche

1. Vorderkantenabschnitt (1) mit einer Steuerung der laminaren Strömung, umfassend:
eine perforierte Außenhaut (2), die mit einem aerodynamischen Vorderkantenprofil geformt ist,
eine Innenfläche (3), die in Bezug auf die Außenhaut (2) innen angeordnet ist,
eine Vielzahl von Saugkammern (4), die zwischen der Außenhaut (2) und der Innenfläche (3) gebildet sind,
eine Vielzahl von radialen Strukturelementen (5), um strukturellen Lasten an der Vorderkante (1) standzuhalten,
wobei der Vorderkantenabschnitt (1) ferner ein am Vorderkantenabschnitt (1) in Richtung der Spannweitenerstreckung angeordnetes rohrförmiges Element (6) umfasst, und wobei die Innenfläche (3) perforiert ist und ein Teil des rohrförmigen Elements (6) ist, so dass das rohrförmige Element (6) in Zusammenhang mit der Innenfläche (3) Perforationen derart aufweist, dass ein Außenbereich der Vorderkante (1) mit dem Inneren des rohrförmigen Elements (6) durch die Saugkammern (4) und die Innenfläche (3) in Verbindung steht;
wobei die radialen Strukturelemente (5) am Vorderkantenabschnitt (1) radial verteilt sind;
wobei ein radiales Strukturelement (5) so angeordnet ist, dass eines seiner Enden am vorderen Vorderkantenpunkt (7) der Vorderkante (1) angebracht ist;
wobei die radialen Strukturelemente (5) freie Kanten aufweisen;
und wobei die radialen Strukturelemente (5) an ihren freien Kanten mit Flanschen (5') versehen sind, um die Verbindungsfläche mit der Außenhaut (2) zu vergrößern.

2. Vorderkantenabschnitt (1) mit einer Steuerung der laminaren Strömung, umfassend:
eine perforierte Außenhaut (2), die mit einem aerodynamischen Vorderkantenprofil geformt ist.
eine Innenfläche (3), die in Bezug auf die Außenhaut (2) innen angeordnet ist,
eine Vielzahl von Saugkammern (4), die zwischen der Außenhaut (2) und der Innenfläche (3) gebildet sind.
eine Vielzahl von radialen Strukturelementen (5), um strukturellen Lasten an der Vorderkante (1) standzuhalten,
wobei die radialen Strukturelemente (5) am Vorderkantenabschnitt (1) radial verteilt sind;
wobei die radialen Strukturelemente (5) gebohrt sind, so dass ein Außenbereich der Vorderkante (1) mit einem Innenbereich der Vorderkante (1) durch die Saugkammern (4) und die radialen Strukturelemente (5) in Verbindung steht;
wobei ein radiales Strukturelement (5) so angeordnet ist, dass eines seiner Enden am vorderen Vorderkantenpunkt (7) der Vorderkante (1) angebracht ist;
und wobei die radialen Strukturelemente (5) an einem ihrer Enden mit Flanschen (5') versehen sind, um die Verbindungsfläche mit der Außenhaut (2) zu vergrößern.

3. Vorderkantenabschnitt (1) nach Anspruch 1 oder 2, wobei jedes radiale Strukturelement (5) so positioniert ist, dass eines seiner Enden an der Außenhaut (2) und das andere Ende an der Innenfläche (3) so angebracht ist, dass jede Saugkammer (4) aus zwei aufeinanderfolgenden radialen Strukturelementen (5), einem Teil der Außenhaut (2) und einem Teil der Innenfläche (3) gebildet ist.

4. Vorderkantenabschnitt (1) nach Anspruch 2, wobei die radialen Strukturelemente (5) freie Kanten aufweisen.

5. Vorderkantenabschnitt (1) nach Anspruch 1 oder 4, wobei die freien Kanten innen mit der Außenhaut (2) verbunden sind.

6. Vorderkantenabschnitt (1) nach Anspruch 1 oder 2, wobei jedes radiale Strukturelement (5) eine freie Kante aufweist, die mit der Innenfläche der Außenhaut (2) verschweißt ist.

7. Vorderkantenabschnitt (1) nach einem der vorhergehenden Ansprüche, erhalten aus einem Kompositmaterial.

8. Vorderkantenabschnitt (1) nach Anspruch 7, wobei das Kompositmaterial ausgewählt ist aus der Liste: Kohlefaserverstärkter Kunststoff (CFK), Glasfaser, Aramid oder eine Kombination davon.

9. Vorderkantenabschnitt (1) nach Anspruch 1 oder 2, wobei die Vorderkante (1) metallisch ist.

10. Vorderkantenabschnitt (1) nach Anspruch 8, ferner umfassend eine Erosionsschutzschicht, die bei Verwendung eines CFK-Materials mit der Außenhaut (2) gemeinsam verbunden oder gemeinsam ausgehärtet ist.

11. Vorderkantenabschnitt (1) nach Anspruch 10, wobei die Erosionsschutzschicht aus einer auf einer ihrer Oberflächen mit Harz, Dichtungsmittel oder Klebstoff imprägnierten Polyurethanbeschichtung, metallischen Beschichtung oder metallischen Schicht besteht.

## Revendications

1. Section de bord d'attaque (1) ayant une régulation de flux laminaire comprenant :
un revêtement externe perforé (2) façonné avec un profil de bord d'attaque aérodynamique,
une surface interne (3) agencée de manière intérieure par rapport au revêtement externe (2),
une pluralité de chambres d'aspiration (4) formées entre le revêtement externe (2) et la surface interne (3) ,
une pluralité d'éléments structurels radiaux (5) pour résister à des charges structurelles au niveau du bord d'attaque (1), dans laquelle,
la section de bord d'attaque (1) comprend en outre un élément tubulaire (6) agencé dans le sens de l'envergure au niveau de la section de bord d'attaque (1), et dans laquelle la surface interne (3) est perforée et fait partie de l'élément tubulaire (6) de sorte que l'élément tubulaire (6) ait des perforations en correspondance avec la surface interne (3) de façon à ce qu'une région extérieure du bord d'attaque (1) soit en communication avec l'intérieur de l'élément tubulaire (6) à travers lesdites chambres d'aspiration (4) et la surface interne (3) ;
dans laquelle les éléments structurels radiaux (5) sont répartis radialement au niveau de la section de bord d'attaque (1) ;
dans laquelle un élément structurel radial (5) est agencé de sorte que l'une de ses extrémités soit attachée au niveau du point avant de bord d'attaque (7) du bord d'attaque (1) ;
dans laquelle les éléments structurels radiaux (5) ont des bords libres ;
et dans laquelle les éléments structurels radiaux (5) sont dotés au niveau de leurs bords libres de rebords (5') pour élargir la surface d'interface avec le revêtement externe (2).

2. Section de bord d'attaque (1) ayant une régulation de flux laminaire comprenant :
un revêtement externe perforé (2) façonné avec un profil de bord d'attaque aérodynamique,
une surface interne (3) agencée de manière intérieure par rapport au revêtement externe (2),
une pluralité de chambres d'aspiration (4) formées entre le revêtement externe (2) et la surface interne (3),
une pluralité d'éléments structurels radiaux (5) pour résister à des charges structurelles au niveau du bord d'attaque (1), dans laquelle
les éléments structurels radiaux (5) sont répartis radialement au niveau de la section de bord d'attaque (1) ;
dans laquelle les éléments structurels radiaux (5) sont percés, de sorte qu'une région extérieure du bord d'attaque (1) soit en communication avec une région intérieure du bord d'attaque (1) à travers les chambres d'aspiration (4) et les éléments structurels radiaux (5) ;
dans laquelle un seul élément structurel radial (5) est agencé de sorte que l'une de ses extrémités soit attachée au niveau du point avant de bord d'attaque (7) du bord d'attaque (1) ;
et dans laquelle les éléments structurels radiaux (5) sont dotés au niveau l'une de leurs extrémités de rebords (5') pour élargir la surface d'interface avec le revêtement externe (2).

3. Section de bord d'attaque (1) selon la revendication 1 ou 2, dans laquelle chaque élément structurel radial (5) est positionné de sorte que l'une de ses extrémités soit attachée au revêtement externe (2) et l'autre extrémité soit attachée à la surface interne (3), de sorte que chaque chambre d'aspiration (4) soit formée de deux éléments structurels radiaux consécutifs (5), une partie du revêtement externe (2) et une partie de la surface interne (3).

4. Section de bord d'attaque (1) selon la revendication 2, dans laquelle les éléments structurels radiaux (5) ont des bords libres.

5. Section de bord d'attaque (1) selon les revendications 1 ou 4, dans laquelle les bords libres sont liés intérieurement au revêtement externe (2).

6. Section de bord d'attaque (1) selon la revendication 1 ou 2, dans laquelle chaque élément structurel radial (5) a un bord libre qui est soudé à la surface interne du revêtement externe (2).

7. Section de bord d'attaque (1) selon l'une quelconque des revendications précédentes, obtenue à partir d'un matériau composite.

8. Section de bord d'attaque (1) selon la revendication 7, dans laquelle le matériau composite est choisi dans la liste suivante : un plastique renforcé de fibres de carbone (CFRP), une fibre de verre, un aramide ou toute combinaison de ceux-ci.

9. Section de bord d'attaque (1) selon la revendication 1 ou 2, dans laquelle le bord d'attaque (1) est métallique.

10. Section de bord d'attaque (1) selon la revendication 8, comprenant en outre une couche de protection contre l'érosion, co-liée ou co-durcie avec le revêtement externe (2) lors de l'utilisation d'un matériau en CFRP.

11. Section de bord d'attaque (1) selon la revendication 10, dans laquelle la couche de protection contre l'érosion consiste en un revêtement de polyuréthane, un revêtement métallique ou une couche métallique imprégnée de résine, un agent d'étanchéité ou un adhésif sur l'une de ses surfaces.
